# EUROPEAN PATENT APPLICATION

(11) **EP 4 653 354 A1**
(43) Date of publication of application: **26.11.2025**
(21) Application number: 23922176.5
(22) Date of filing: 24.04.2023
(51) Int. Cl.: B65G 47/91, B65G 47/82, H01M 10/0587

(54) **FEEDING SYSTEM AND BATTERY-CELL WINDING APPARATUS**

(30) Priority: 15.02.2023 CN 202320219281 U
(71) Applicant: Contemporary Amperex Technology Co., Limited, Ningde, Fujian 352100 (CN)
(72) Inventor: WU, Xiang, Ningde, Fujian 352100 (CN); ZHANG, Xiaowei, Ningde, Fujian 352100 (CN); ZHANG, Wei, Ningde, Fujian 352100 (CN); WEN, Yuqian, Ningde, Fujian 352100 (CN); SUN, Chang, Ningde, Fujian 352100 (CN)
(74) Representative: Gong, Jinping
(86) International application number: PCT/CN2023/090378
(87) International publication number: WO 2024/169047

(57) **Abstract**

A feeding system and a battery-cell winding apparatus. The feeding system comprises: a placement device (1) provided with a support surface (11), wherein the support surface is configured for the placement of a support member (2); a feeding device (3) configured to transfer the support member to the support surface; and a transfer device (4), which is connected to the placement device and is configured to drive the placement device to move, so as to transfer the support member onto a separator (7) or an electrode plate (8), which is wound by means of a winding mechanism (6). The feeding system is configured to automatically transfer the support member to the winding mechanism, so that the support member is wound into a battery cell, thereby relieving the problem of capacity fade or lithium plating of the battery cell by means of providing the support member for the battery cell.

## Description

### CROSS-REFERENCE TO RELATED APPLICATION

The present application claims priority to Chinese Patent Application No. CN202320219281.4 filed on February 15, 2023, and entitled "FEEDING SYSTEM AND BATTERY-CELL WINDING APPARATUS", the content of which is incorporated herein by reference in its entirety.

### TECHNICAL FIELD

The present application relates to the technical field of batteries, and in particular, to a feeding system and cell winding equipment.

### BACKGROUND

In the technical field of battery production, cells are typically manufactured by winding anode electrode plates, cathode electrode plates, and separation films in a specific manner. However, after the winding of the cells is completed, issues such as capacity plummeting or lithium plating are prone to occur.

### SUMMARY

The present application provides a feeding system and cell winding equipment, aimed at mitigating the issues of capacity plummeting or lithium plating in cells.

The present application is implemented through the following technical solutions.

In a first aspect, the present application provides an optional embodiment of a feeding system. The feeding system includes: a placement apparatus provided with a supporting surface, the supporting surface being configured to hold a support member; a material feeding apparatus configured to transport the support member onto the supporting surface; and a transfer apparatus connected to the placement apparatus, the transfer apparatus being configured to drive the placement apparatus to move to transfer the support member onto a separator or an electrode plate wound by a winding mechanism.

In the above solution, the placement apparatus is configured to hold the support member; the material feeding apparatus is configured to automatically replenish the support member for the placement apparatus, featuring a high degree of automation, which helps improve production efficiency. The transfer apparatus connects to and drives the placement apparatus, transferring the support member placed on the supporting surface to the separator or the electrode plate. By utilizing the frictional force exerted by the separator or the electrode plate during winding, the support member is driven to wind together with the separator and the electrode plate. After the cell winding is completed, the support member is accommodated within the cell and becomes part of the cell, serving to support other members inside the cell. This reduces the probability of the center hole collapse of the cell, thereby mitigating the issues of capacity plummeting or lithium plating in the cell.

In addition to the aforementioned advantages, the above solution has the advantage of a higher degree of automation and thus a higher production efficiency. Specifically, the action of the feeding system transferring the support member to the winding mechanism can be synchronized with the winding action of the winding mechanism, thus minimizing the impact on the winding efficiency of the cell. Moreover, the feeding system itself has a simple structure, making it easy to manufacture and use. As a result, the feeding system does not significantly increase production costs, contributing to the control of overall production costs.

According to some embodiments of the present application, the placement apparatus is provided with two limiting members, and the two limiting members are arranged oppositely and protrude from the supporting surface; a sliding groove is formed between the two limiting members to allow the support member to move on the supporting surface.

In the above solution, the limiting member is configured to provide motion guidance and limiting function for the support member, so that the support member can be smoothly wound in.

According to some embodiments of the present application, the feeding system further includes an adjustment mechanism. The limiting members are connected to the adjustment mechanism, and the adjustment mechanism is configured to adjust the protruding height of the limiting members from the supporting surface.

In the above solution, since the protruding height of the limiting members from the supporting surface is adjustable, the limiting members can be adapted to support members of different thicknesses.

According to some embodiments of the present application, the supporting surface is provided with accommodating grooves for accommodating the limiting members.

In the above solution, the provision of the accommodating grooves helps simplify the assembly method of the limiting members.

According to some embodiments of the present application, the transfer apparatus includes: a pushing member connected to the placement apparatus, the pushing member being configured to push the placement apparatus; and a rotating member connected to the placement apparatus, the rotating member being configured to drive the placement apparatus to rotate so that the extension direction of the sliding groove aligns with the winding direction of the separator or the electrode plate.

In the above solution, the rotating member can adjust the extension direction of the sliding groove, reducing unnecessary interference caused by the limiting member to the support member, thereby allowing the support member to wind in properly.

According to some embodiments of the present application, the supporting surface is provided with a first air hole; the feeding system further includes a first negative pressure mechanism, and the first negative pressure mechanism is in communication with the first air hole.

In the above solution, the first air hole can serve the function of adsorbing the support member, which is used to reduce the probability of curling occurring at the edges or corners of the support member.

According to some embodiments of the present application, the supporting surface is provided with a first air hole; the feeding system further includes an air-blowing mechanism, and the air-blowing mechanism is in communication with the first air hole.

In the above solution, the first air hole can also blow the support member away from the supporting surface to reduce the interaction force between the support member and the supporting surface, thereby facilitating the winding-in of the support member.

According to some embodiments of the present application, the supporting surface includes a first region and a second region, with the first region and the second region arranged along the movement direction of the support member on the supporting surface, where the first region and the second region are both provided with the first air holes, with the air blowing pressure of the first air hole in the first region being greater than the air blowing pressure of the first air hole in the second region.

In the above solution, the gas blown out from the first air hole has a tendency to facilitate the winding-in of the support member.

According to some embodiments of the present application, the material feeding apparatus includes: a pickup assembly configured to pick up the support member; and a driving mechanism connected to the pickup assembly, the driving mechanism being configured to drive the pickup assembly to move to transport the support member picked up by the pickup assembly onto the supporting surface.

In the above solution, the structure of the material feeding apparatus is simple, and the material feeding apparatus can pick up the support member elsewhere. Therefore, the support member can be placed at a position away from the placement apparatus before being transported, so as to avoid mutual interference between the support member and the placement apparatus.

According to some embodiments of the present application, the pickup assembly includes an adsorption member, and the adsorption member is configured to adsorb the support member.

In the above solution, the structure of the pickup assembly is simple, easy to use, and also helps to control costs.

According to some embodiments of the present application, the pickup assembly further includes a second negative pressure mechanism, and the adsorption member is provided with an adsorption surface for making contact with the support member; the adsorption surface is provided with a second air hole, and the second negative pressure mechanism is in communication with the second air hole.

The specific structure involved in the above solution is simple and easy to apply in practice.

According to some embodiments of the present application, the pickup assembly includes a gripping member, and the gripping member is configured to grip the support member.

In the above solution, the specific structure of the gripping member can refer to the prior art, and thus the gripping member also has the advantages of a simple structure and ease of practical application.

According to some embodiments of the present application, the feeding system further includes a material preparation box, where the material preparation box is configured to accommodate the support member, and the material feeding apparatus is configured to transport the support member within the material preparation box onto the supporting surface.

In the above solution, the material preparation box is configured to receive the support members, which can be neatly stacked in the material preparation box to facilitate picking up by the material feeding apparatus.

According to some embodiments of the present application, the material preparation box is provided with an opening; the feeding system further includes a jacking apparatus, and the jacking apparatus is configured to jack up the support member within the material preparation box so as to move the support member in a direction close to the opening.

In the above solution, the position of the support member picked up by the material feeding apparatus each time is relatively fixed, which helps to reduce the control difficulty of the material feeding apparatus, thereby lowering the overall cost.

In another aspect, the present application further provides cell winding equipment. The cell winding equipment includes: a winding mechanism configured to wind a separator and an electrode plate; and the feeding system according to the foregoing embodiments. The transfer apparatus is configured to drive the placement apparatus to move to transfer the support member onto the separator or the electrode plate.

In the above solution, the cell winding equipment allows the support member to automatically participate in the winding of the cell, achieving a higher degree of automation and thereby offering better production efficiency. Moreover, the cell winding equipment has fewer additional structures compared to the prior art, which helps to control the extra costs incurred.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a feeding system according to some embodiments of the present application;
FIG. 2 is a schematic diagram of cell winding equipment according to some embodiments;
FIG. 3 is a schematic diagram of a placement apparatus according to some embodiments, where a support member is placed on a supporting surface;
FIG. 4 is a schematic diagram of a placement apparatus according to some embodiments;
FIG. 5 is a schematic diagram of a placement apparatus according to some embodiments, illustrating an adjustment structure and a limiting member;
FIG. 6 is a schematic diagram of a transfer apparatus and a placement apparatus according to some embodiments;
FIG. 7 is a schematic diagram of a placement apparatus according to some embodiments, illustrating a first air hole, a first negative pressure mechanism, and an air-blowing mechanism;
FIG. 8 is a schematic diagram of a prevention apparatus according to another optional embodiment, where a first negative pressure mechanism and an air-blowing mechanism are integrated into the same apparatus;
FIG. 9 is a schematic diagram of a material feeding apparatus according to some embodiments;
FIG. 10 is a schematic diagram of a feeding system according to another optional embodiment, where a pickup assembly includes a gripping member;
FIG. 11 is a schematic diagram of a material preparation box and a jacking apparatus according to some embodiments; and
FIG. 12 is a schematic diagram of a material preparation box and a jacking apparatus according to some embodiments, where the material preparation box is shown in a semi-sectional view.

The drawings are not drawn to scale.

Description of reference numerals: 1. placement apparatus; 11. supporting surface; 111. first region; 112. second region; 12. limiting member; 121. adjustment mechanism; 122. accommodating groove; 13. sliding groove; 14. first air hole; 15. first negative pressure mechanism; 16. air-blowing mechanism; 2. support member; 3. material feeding apparatus; 31. pickup assembly; 311. adsorption member; 3111. adsorption surface; 3112. second air hole; 312. second negative pressure mechanism; 32. driving mechanism; 321. vertical driving mechanism; 322. horizontal driving mechanism; 313. gripping member; 4. transfer apparatus; 41. pushing member; 42. rotating member; 5. material preparation box; 51. opening; 52. jacking apparatus; 6. winding mechanism; 61. winding member; 62. material feeding member; 7. separator; 71. first separator; 72. second separator; 8. electrode plate; 81. anode electrode plate; 82. cathode electrode plate; 9. semi-finished member.

### DETAILED DESCRIPTION

To make the objectives, technical solutions, and advantages of the embodiments of the present application clearer, the technical solutions in the embodiments of the present application will be clearly and comprehensively described hereinafter with reference to the drawings in the embodiments of the present application. It is obvious that the described embodiments are some, but not all, embodiments of the present application. Assemblies of the embodiments of the present application generally described and illustrated in the drawing herein may be arranged and designed in various configurations.

Therefore, the following detailed description of the embodiments of the present application provided in the drawings is not intended to limit the scope of the present application as claimed but merely represents selected embodiments of the present application. All other embodiments obtained by those of ordinary skill in the art without creative efforts with respect to the embodiments in the present application shall fall within the protection scope of the present application.

It should be noted that similar reference numerals and letters refer to similar items in the following drawings, and thus, once an item is defined in one figure, it need not be further defined or explained in the subsequent drawings.

In the description of the present application, it should be noted that if terms such as "center", "upper", "lower", "left", "right", "vertical", "horizontal", "inner", or "outer" appear to indicate orientations or positional relationships, these are based on orientations or positional relationships shown in the drawings, or orientations or positional relationships commonly assumed when using the product of the present application. These terms are merely for the convenience of describing the present application and simplifying the description, rather than indicating or implying that the apparatus or element referred to must have a specific orientation or be constructed and operated in a specific orientation, and thus should not be construed as limiting the present application. Additionally, in the description of the present application, the terms "first", "second", and the like are used for distinguishing descriptions only and shall not be construed as indicating or implying relative importance.

Additionally, in the description of the present application, if terms such as "horizontal" or "vertical" appear, they do not imply that components must be absolutely horizontal or vertical but may instead be slightly inclined. For example, "horizontal" merely indicates that its direction is relatively more horizontal compared to "vertical", and does not mean that the structure must be completely horizontal but may be slightly inclined.

In the description of the present application, it should also be noted that unless explicitly specified and defined otherwise, the terms "provide", "mount", "connect", and "link" should be interpreted in a broad sense. For example, they may refer to a fixed connection, a detachable connection, or an integral connection; they may refer to a mechanical connection or an electrical connection; they may refer to a direct connection or an indirect connection via an intermediate; or they may refer to internal communication between two elements. For those of ordinary skill in the art, the specific meaning of the above terms in the present application may be understood according to the specific condition.

Capacity plummeting or lithium plating occurring after the winding of the cell is a common issue in the field of batteries. One of the more significant reasons for these problems in the cell is deformation in the shape of the cell. Specifically, the center hole of the cell is prone to collapse, which is one of the causes leading to issues such as capacity plummeting or lithium plating.

One of the reasons for the collapse of the center hole in the cell is that, after the winding of the cell is completed, the separator or electrode plate at the center hole part of the cell is subjected to pressure from the separator or electrode plate close to the outer layer of the cell. Since the center hole of the cell cannot provide support to the separator or electrode plate, the separator or electrode plate at the center hole part cannot withstand the pressure exerted by the separator or electrode plate at the outer layer, leading to the collapse of the center hole. To address this technical issue, a straightforward solution would be to directly insert a central pin into the center hole. The central pin is used to provide support to the center hole of the cell, thereby reducing the probability of center hole collapse. However, after inserting a central pin into the center hole, issues such as poor electrolyte infiltration may arise. Furthermore, the cost of the central pin is relatively high, potentially introducing new technical problems. Addressing one technical issue by introducing new ones is clearly counterproductive.

In view of this, efforts are being made to develop a new technical solution, aiming to provide support for the center hole while controlling the occurrence of new issues.

After theoretical analysis and experimental validation, the inventors discovered that introducing an additional support member into the cell can alleviate the problem of center hole collapse of the cell. Moreover, since the support member is located inside the cell, the support member has minimal interference with the electrolyte. Specifically, the support member, after being wound into the cell, ends up in a curved state with a certain degree of arc. Based on the principle of elastic deformation, the support member in the curved state exhibits a tendency to eccentrically expand outward. As a result, the support member can press against the separator or electrode plate inside the cell, thereby providing support and preventing center hole collapse. Additionally, the force applied by the support member on the separator or electrode plate tends to spread the separator and electrode plate apart, which to some extent also alleviates the problem of poor pin removal. In view of this, the present application intends to provide a feeding system that introduces a support member into the cell. By utilizing the support member to provide support for the cell, the probability of center hole collapse is reduced, ultimately mitigating the probability of issues such as capacity plummeting or lithium plating in cells.

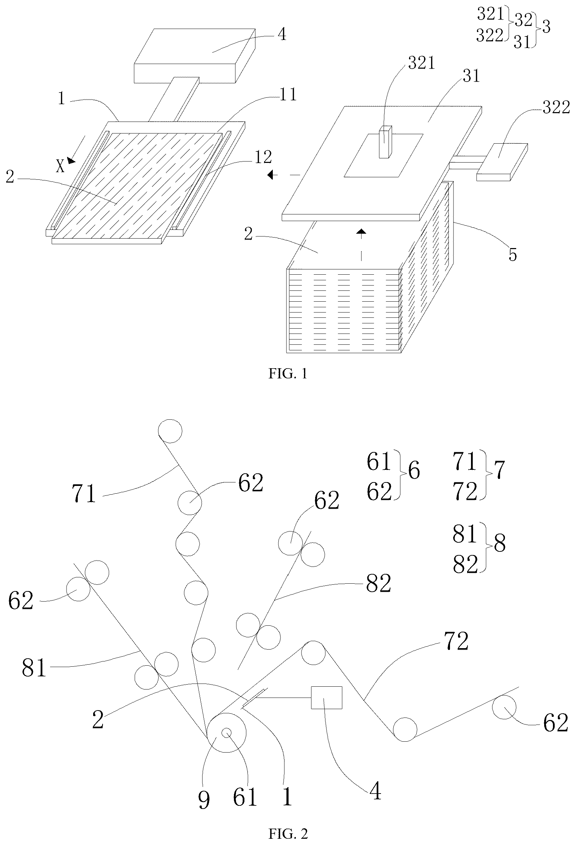

According to some optional embodiments of the present application, referring to FIG. 1, the feeding system includes a placement apparatus 1, a material feeding apparatus 3, and a transfer apparatus 4. The placement apparatus 1 is provided with a supporting surface 11, and the supporting surface 11 is configured to hold a support member 2. The material feeding apparatus 3 is configured to transport the support member 2 onto the supporting surface 11. The transfer apparatus 4 is connected to the placement apparatus 1, and the transfer apparatus 4 is configured to drive the placement apparatus 1 to move.

The operation process of the feeding system can be referenced in FIG. 2. The winding mechanism 6 is configured to wind a separator 7 and an electrode plate 8 to manufacture a cell. The transfer apparatus 4 is configured to drive the placement apparatus 1 to move close to the separator 7, enabling the support member 2 to make contact with the separator 7. Specifically, in the optional embodiment shown in FIG. 2, the separator 7 includes a first separator 71 and a second separator 72, and the support member 2 makes contact with the second separator 72. During the winding process, after the support member 2 makes contact with the second separator 72, there is a speed difference between the second separator 72 and the support member 2. Utilizing the frictional force generated by this speed difference, the second separator 72 drives the support member 2 to move, causing the support member 2 to engage in the winding process. Ultimately, this enables the support member 2, the first separator 71, the second separator 72, the anode electrode plate 81, and the cathode electrode plate 82 to be jointly wound into a cell. Additionally, in some optional embodiments, the support member 2 may also be arranged to be in contact with the electrode plate 8, or the support member 2 may be arranged to be in contact with the first separator 71.

The specific structure or form of the placement apparatus 1 is not particularly limited. For example, the placement apparatus may take the form of a plate as shown in FIG. 1 or other configurations. In short, as long as a supporting surface 11 capable of stably holding the support member 2 can be machined on the surface of the placement apparatus 1 it is acceptable. The supporting surface 11 is optionally a flat surface, allowing the support member 2 to remain in a relatively stable state when the support member 2 is placed on the supporting surface 11. The material feeding apparatus 3 is configured to transport and place the support member 2 onto the supporting surface 11. Therefore, the specific structure of the material feeding apparatus 3 may be designed by referencing the prior art. For example, the material feeding apparatus 3 may be an apparatus with a gripping function, which transports the support member 2 by gripping the support member 2. Alternatively, the material feeding apparatus 3 may be an apparatus with a pushing function, such as a cylinder, which transports the support member 2 by pushing the support member. The function of the transfer apparatus 4 is to drive the placement apparatus 1 to move. Therefore, the specific structure of the transfer apparatus 4 may also be designed by referencing the prior art. For example, the transfer apparatus 4 may be a hydraulic cylinder mechanism, a lead screw mechanism, or the like, which is not particularly limited in these embodiments.

The advantages of these embodiments are that the overall structure of the feeding system is simple, which helps control the additional production costs. The feeding system can fully automate the function of transferring the support member 2 to the separator 7 or the electrode plate 8. The entire operation process is fully automated, reducing manual intervention and contributing to improved efficiency in the production process. The feeding system operates simultaneously with the winding of the separator 7 and the electrode plate 8. Moreover, during the process of the feeding system transferring the support member 2 to the separator 7 or the electrode plate 8, the winding mechanism 6 does not stop. Therefore, the feeding system has minimal impact on the original winding process and, as a result, has minimal impact on the efficiency of the winding process for the entire cell.

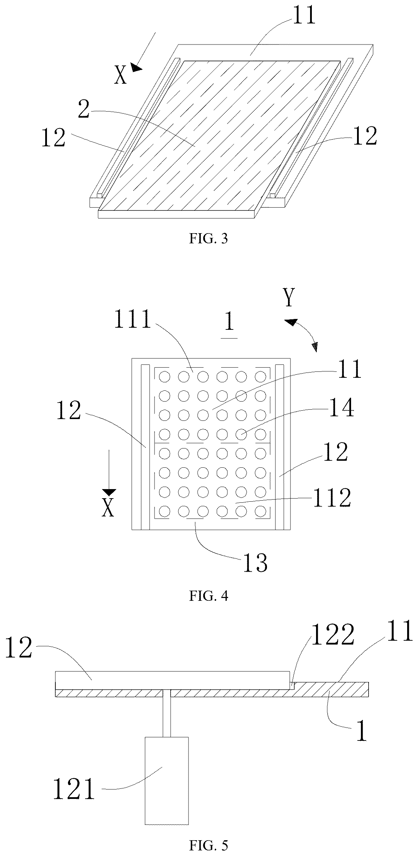

In some optional embodiments, referring to FIGS. 1 and 3, the placement apparatus 1 is provided with two limiting members 12. The two limiting members 12 are arranged oppositely, and the two limiting members 12 both protrude from the supporting surface 11. A sliding groove 13 is formed between the two limiting members 12 to allow the support member 2 to move on the supporting surface 11.

The limiting member 12 has a raised structure, and the limiting member 12 is arranged on the supporting surface 11. Moreover, in this embodiment, the limiting member 12 takes the form of protruding upward from the supporting surface 11. Certainly, the limiting member 12 may also be connected to the edge of the placement apparatus 1 and protrude relative to the supporting surface 11. In this embodiment, the limiting member 12 is linear in the extension direction, but in other optional embodiments, the limiting member 12 may also take the form of a curve, a broken line, or other shapes in the extension direction. The distance between the two limiting members 12 should at least accommodate the support member 2. When the support member 2 slides on the supporting surface 11, the support member 2 slides along the extension direction X of the sliding groove 13 as shown in FIG. 3.

The advantage of this embodiment lies in that the limiting member 12 provides a limiting function for the support member 2 during the sliding process on the supporting surface 11, thereby reducing the probability of the limiting member 12 detaching from the supporting surface 11 during sliding. Meanwhile, the limiting member 12 also provides the function of limiting the rotation of the support member 2, enabling the support member 2 to be wound in a predetermined orientation.

In some optional embodiments, referring to FIG. 5, the feeding system further includes an adjustment mechanism 121. The adjustment mechanism 121 is connected to the limiting member 12, and the adjustment mechanism 121 is configured to adjust the protruding height of the limiting member 12 from the supporting surface 11.

The adjustment mechanism 121 may be a cylinder, a lead screw mechanism, or a push-rod mechanism, among other existing mechanisms capable of achieving push-and-pull functions. The adjustment mechanism 121 is configured to drive the movement of the limiting member 12, thereby adjusting the protruding height of the limiting member 12 relative to the supporting surface 11. Moreover, in this embodiment, the limiting member 12 is movably connected to the placement apparatus 1.

The advantage of arranging the adjustment mechanism 121 is that it can accommodate support members 2 of different thicknesses. Support members 2 of different thicknesses may be used for cells of different dimensions. If the protruding height of the limiting member 12 relative to the supporting surface 11 is fixed, the blocking and limiting effect provided by the limiting member 12 to the support member 2 may not be ideal when conveying thicker support members 2. In this embodiment, when conveying thicker support members 2, the protruding height of the limiting member 12 from the supporting surface 11 can be correspondingly adjusted, increasing the protruding height of the limiting member 12 from the supporting surface 11. This results in a better blocking and limiting effect of the limiting member 12 on the support member 2. In other embodiments, if the thickness of the support member 2 is relatively small, causing the highest point of the limiting member 12 to exceed the highest point of the support member 2, there may be an issue where the separator 7 or the electrode plate 8 cannot make contact with the support member 2. In this case, the protruding height of the limiting member 12 from the supporting surface 11 can be lowered to address the above technical issue.

Additionally, in some optional embodiments, the adjustment mechanism 121 may further be configured such that when the support member 2 has not yet been transported to the supporting surface 11, the adjustment mechanism 121 drives the limiting member 12 to move to a position where the limiting member does not protrude from the supporting surface 11, thereby reducing the probability of the limiting member 12 causing collisions. After the support member 2 is transported to the supporting surface 11, the adjustment mechanism 121 then drives the limiting member 12 to move to a position protruding from the supporting surface 11, thus providing blocking and limiting for the support member 2.

In some optional embodiments, an accommodating groove 122 is provided on the supporting surface 11. The accommodating groove 122 is configured to accommodate the limiting member 12.

The accommodating groove 122 is a recessed structure provided on the supporting surface 11 for assembling the limiting member 12. In some optional embodiments, in the case where the limiting member 12 can be driven to move by the adjustment mechanism 121, the limiting member 12 is movably connected to the accommodating groove 122.

The accommodating groove 122 can provide an assembly positioning function for the limiting member 12, thereby reducing the difficulty of mounting the limiting member 12.

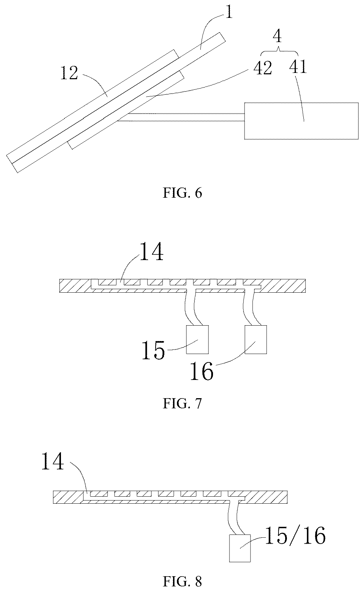

In some optional embodiments, referring to FIG. 6, the transfer apparatus 4 includes a pushing member 41 and a rotating member 42. Both the pushing member 41 and the rotating member 42 are connected to the placement apparatus 1, where the function of the pushing member 41 is to drive the placement apparatus 1 to perform a translational motion, enabling the placement apparatus 1 to move to at least a first position and a second position. When the placement apparatus 1 is in the first position, the limiting member 12 placed on the supporting surface 11 can make contact with the separator 7 or the electrode plate 8. When the placement apparatus 1 is in the second position, the placement apparatus 1 can receive the support member 2 transported by the material feeding apparatus 3. The function of the rotating member 42 is to drive the placement apparatus 1 to rotate in the Y-direction as shown in FIG. 4, thus adjusting the extension direction of the sliding groove 13. This aligns the extension direction of the sliding groove 13 with the winding direction of the separator 7 or the electrode plate 8 in contact with the support member 2.

The pushing member 41 may be any existing mechanism capable of providing the push-and-pull function for the placement apparatus 1, such as a hydraulic cylinder, a lead screw mechanism, or a push-rod mechanism. The rotating member 42 may be any existing mechanism capable of driving the placement apparatus 1 to rotate, such as a rotary motor. The specific structures of both can refer to the prior art.

Only when the orientation of the sliding groove 13 is substantially the same as that of the support member 2 transported by the material feeding apparatus 3 can the support member 2 be transported into the sliding groove 13. However, in some production environments, due to the improper layout of the feeding system or the winding mechanism, the extension direction of the sliding groove 13 during the reception of the support member 2 may not align with the winding direction of the separator 7 or the electrode plate 8. In such a case, even if the pushing member 41 transfers the support member 2 to the separator 7 or the electrode plate 8, the support member 2 would subsequently be blocked by the limiting member 12, preventing the support member from being wound. By adding the rotating member 42, the rotating member 42 can drive the placement apparatus 1 to rotate, allowing the placement apparatus 1 to rotate to a position where the sliding groove 13 aligns with the winding direction of the separator 7 or the electrode plate 8. This enables the support member 2 to be properly wound.

In some optional embodiments, referring to FIGS. 4 and 7, the supporting surface 11 is provided with a first air hole 14, and the feeding system further includes a first negative pressure mechanism 15. The first negative pressure mechanism 15 is in communication with the first air hole 14, enabling the first air hole 14 to have an air suction function.

The first negative pressure mechanism 15 may be a mechanism with an air suction function in the prior art, such as a pump. The specific structure of the first negative pressure mechanism can refer to the prior art. The first air hole 14 may be a through hole or a blind hole. In the case where the first air hole 14 is a blind hole, referring to FIG. 7, a flow channel is also provided within the placement apparatus 1. The first air hole 14 communicates with the first negative pressure mechanism 15 through the flow channel. There may be one or a plurality of first air holes 14.

The first negative pressure mechanism 15 sucks air via the first air hole 14 to serve the function of adsorbing the limiting member 12, so that the limiting member 12 can be more stably placed on the supporting surface 11, thereby reducing the risk of the limiting member 12 automatically detaching from the supporting surface 11 when not yet wound in. Moreover, after the first air hole 14 adsorbs the limiting member 12, the first air hole 14 can provide suction to the edges and corners of the limiting member 12, reducing the probability of curling at the edges and corners of the limiting member 12.

Further referring to FIGS. 4 and 7, in some optional embodiments, the feeding system further includes an air-blowing mechanism 16. The air-blowing mechanism 16 is in communication with the first air hole 14, enabling the first air hole 14 to also have an air-blowing function. The air-blowing mechanism 16 may also be an existing mechanism with an air-blowing function, such as a pump or fan. The specific structure of the air-blowing mechanism can refer to the prior art.

The air-blowing mechanism 16 can blow air via the first air hole 14, functioning to blow the support member 2 away from the supporting surface 11. This helps to reduce the interaction force between the support member 2 and the supporting surface 11, thereby lowering the probability of the problem where the support member 2 cannot be wound along with the separator 7 or the electrode plate 8.

In some optional embodiments, referring to FIG. 8, the first negative pressure mechanism 15 and the air-blowing mechanism 16 may be implemented by one mechanism. Such mechanisms that can perform both air blowing and air suction already exist in the prior art, so the specific structure of this embodiment can also refer to the prior art.

Referring to FIG. 4, in some optional embodiments, the supporting surface 11 is provided with a first region 111 and a second region 112, with the first region 111 and the second region 112 arranged along the movement direction of the support member 2 on the supporting surface 11. Both the first region 111 and the second region 112 are provided with first air holes 14, and the air-blowing mechanism 16 can blow air to the support member 2 via the first air holes 14. The air blowing pressure of the first air hole 14 in the first region 111 is greater than the air blowing pressure of the first air hole 14 in the second region 112.

The movement direction of the support member 2 on the supporting surface 11 refers to the direction in which the support member 2 moves relative to the supporting surface 11 when the support member 2 moves along with the separator 7 or the electrode plate 8. In this embodiment, the movement direction of the support member 2 relative to the supporting surface 11 is the extension direction X of the sliding groove 13 indicated by the arrow in FIG. 4. The first region 111 and the second region 112 are virtual regions artificially defined on the supporting surface 11 and are not intended to limit the structure. Meanwhile, the first region 111 and the second region 112 are arranged adjacent to each other but may also be spaced apart from each other. The method to achieve the effect where the air blowing pressure of the first air hole 14 in the first region 111 is greater than the air blowing pressure of the first air hole 14 in the second region 112 is as follows: The first air hole 14 in the first region 111 is in communication with one air-blowing mechanism 16, and the first air hole 14 in the second region 112 is in communication with another air-blowing mechanism 16. By adjusting the states of the two air-blowing mechanisms 16, the effect where the air blowing pressure of the first air hole 14 in the first region 111 is greater than the air blowing pressure of the first air hole 14 in the second region 112 can be achieved. Additionally, the above function can also be achieved by designing first air holes 14 with different diameters. For example, the diameter of the first air hole 14 in the first region 111 is smaller than the diameter of the first air hole 14 in the second region 112.

The advantage of this embodiment lies in that when the air blowing pressure of the first air hole 14 in the first region 111 is greater than the air blowing pressure of the first air hole 14 in the second region 112, the force exerted by the air blown out of the first air hole 14 onto the support member 2 has the function of promoting the support member 2 to move in a unidirectional direction from the first region 111 toward the second region 112. This movement direction happens to align with the movement direction of the support member 2 when the support member is wound in along with the separator 7 or the electrode plate 8, thereby facilitating the winding of the support member 2.

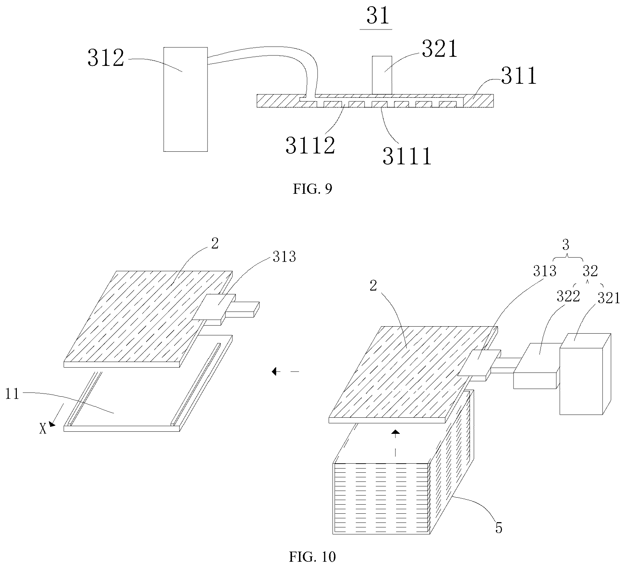

In some optional embodiments, referring to FIGS. 1 and 9, the material feeding apparatus includes a pickup assembly 31 and a driving mechanism 32. The pickup assembly 31 is configured to pick up the support member 2 from the position where the support members 2 are stacked, and the driving mechanism 32 is configured to drive the pickup assembly 31 to move so that, after picking up the support member 2, the pickup assembly 31 can transport the support member 2 to the supporting surface 11. This embodiment has the advantages of a simple structure and ease of implementation, which helps control costs. Moreover, the position where the support members 2 are stacked can be appropriately distanced from the placement apparatus 1 to avoid physical interference between the support members 2 and the placement apparatus 1.

The pickup method by which the pickup assembly 31 picks up the support member 2 can include one or more of the methods such as pickup, gripping, pushing, or transferring. Therefore, the specific structure of the pickup assembly 31 can refer to members with the above functions in the prior art, such as slide rails, pulley mechanisms, or clamping jaws, which will not be elaborated on here. In addition to the function of picking up the support member 2, the pickup assembly 31 also has the function of releasing the support member 2 in order to place the support member 2 onto the supporting surface 11. The driving mechanism 32 may also be any existing member with a driving function, such as a cylinder, a push rod, or a lead screw mechanism. The specific structure will not be elaborated on here.

As some optional embodiments, referring to FIGS. 1 and 9, the pickup assembly 31 includes an adsorption member 311, and the adsorption member 311 is configured to adsorb the support member 2. The adsorption member 311 may be any existing member with an adsorption function. For example, in some optional embodiments, the adsorption member 311 may be a suction cup. In other optional embodiments, the adsorption member 311 is provided with an adsorption surface 3111, and the adsorption surface 3111 is provided with a second air hole 3112. The pickup assembly 31 includes a second negative pressure mechanism 312, and the second negative pressure mechanism 312 is in communication with the second air hole 3112.

There may be one or a plurality of second air holes 3112. The second negative pressure mechanism 312 may be any existing mechanism with an air suction function, such as a pump.

The second negative pressure mechanism 312 provides negative pressure so that the adsorption surface 3111 can adsorb the support member 2 via the second air hole 3112. When the second negative pressure mechanism 312 stops providing negative pressure, the adsorption surface 3111 releases the support member 2. Clearly, this embodiment has the advantages of simplicity in both principle and structure, making it convenient to control and use.

As a parallel optional embodiment, the pickup assembly 31 includes a gripping member 313, and the gripping member 313 is configured to grip the support member 2. The gripping member 313 may be any existing member with a gripping function, such as clamping jaws. The specific structure of the gripping member 313 can refer to the prior art. The advantage of this parallel embodiment is that the use method and structural principle of the gripping member 313 are simple and easy to implement.

In some optional embodiments, referring to FIGS. 1, 10, 11, and 12, the feeding system further includes a material preparation box 5, and the material preparation box 5 is configured to accommodate the support member 2. The material feeding apparatus 3 can transport the support member 2 from the material preparation box 5 to the supporting surface 11. The material preparation box 5 is a box-shaped member, configured to arrange the support members 2 neatly so that the material feeding apparatus 3 can conveniently pick up the support members 2.

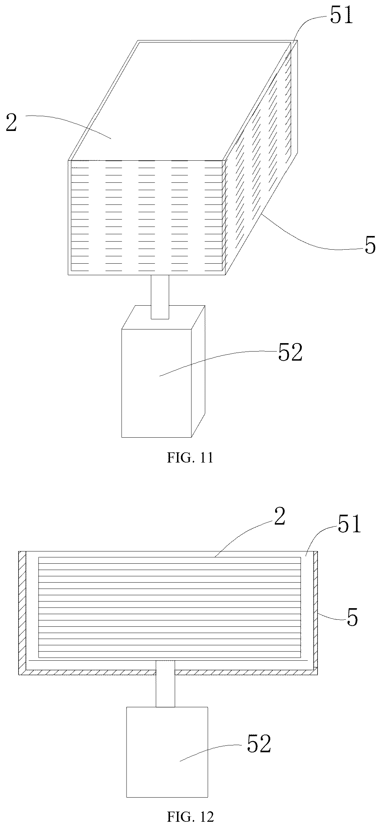

In some optional embodiments, referring to FIGS. 11 and 12, the material preparation box 5 is provided with an opening 51, and the material feeding apparatus 3 can pick up the support member 2 from the opening 51. The feeding system further includes a jacking apparatus 52, and the jacking apparatus 52 is configured to jack up the support member 2 located within the material preparation box 5 so as to move the support member 2 in a direction close to the opening 51.

The jacking apparatus 52 refers to an apparatus with the function of driving objects to move, such as a push-rod apparatus, a hydraulic cylinder, or a lead screw apparatus. The specific structure of the jacking apparatus 52 can refer to the prior art.

When the support member 2 at the opening 51 is picked up, the positions of the remaining support members 2 in the material preparation box 5 become far away from the opening 51. Therefore, the jacking apparatus 52 is utilized to drive the support members 2 as a whole to move in a direction close to the opening 51. This eventually causes the uppermost support member 2 to move to a position close to the opening 51, thereby facilitating the material feeding apparatus 3 in continuing to pick up the support members 2 from the opening 51. Clearly, this embodiment has the advantage of simplifying the action of the material feeding apparatus 3 when gripping the support member 2, thereby making the feeding system easier to control.

An optional embodiment of a feeding system can be referenced in FIG. 1. The feeding system includes a placement apparatus 1, a material feeding apparatus 3, a transfer apparatus 4, and a material preparation box 5. The placement apparatus 1 is provided with a flat supporting surface 11, and the supporting surface 11 is provided with two limiting members 12 protruding relative to the supporting surface 11. The two limiting members 12 are spaced apart from each other, allowing the support member 2 to be placed between the limiting members 12. The material feeding apparatus 3 includes a pickup assembly 31 and a driving mechanism 32. The pickup assembly 31 is configured to pick up or release the limiting member 12. The driving mechanism 32 includes a vertical driving mechanism 321 and a horizontal driving mechanism 322. The vertical driving mechanism 321 and the horizontal driving mechanism 322 are both connected to the pickup assembly 31. The vertical driving mechanism 321 is configured to drive the pickup assembly 31 to move in the vertical direction, and the horizontal driving mechanism 322 is configured to drive the pickup assembly 31 to move in the horizontal direction. The transfer apparatus 4 is connected to the placement apparatus 1, and the transfer apparatus 4 is configured to drive the placement apparatus 1 to move. The material preparation box 5 is configured to accommodate the support member 2, allowing the pickup assembly 31 to pick up the support member 2.

The operation process of the optional embodiment shown in FIG. 1, as indicated by the dashed arrow in FIG. 1, is specifically as follows: Several support members 2 are stacked within the material preparation box 5. The vertical driving mechanism 321 first drives the pickup assembly 31 to descend to a position close to the material preparation box 5, so that the pickup assembly 31 picks up at least one support member 2 from the material preparation box 5. Then, the vertical driving mechanism 321 and the horizontal driving mechanism 322 jointly drive the pickup assembly 31 to move toward the placement apparatus 1. The pickup assembly 31 moves above the supporting surface 11, and the pickup assembly 31 releases the support member 2. The support member 2 falls between the limiting members 12, and the limiting members 12 provide a limitation for the support member 2. Subsequently, the transfer apparatus 4 pushes the placement apparatus 1 outward, transporting the support member 2 so that the support member 2 participates in winding.

Another optional embodiment of the feeding system can be referenced in FIG. 10. This optional embodiment has a structure and an operation process that are substantially the same as the above optional embodiment, with the operation process also being indicated by the dashed arrow in FIG. 10. The optional embodiment in FIG. 10 differs from the optional embodiment in FIG. 1 in that, in this embodiment, the pickup assembly 31 specifically picks up the support member 2 by gripping.

Referring to FIG. 2, in an optional embodiment of cell winding equipment, the cell winding equipment includes a winding mechanism 6 and the feeding system provided according to any one of the above embodiments. The winding mechanism 6 is configured to wind the cell, and the winding mechanism 6 includes a winding member 61 and a material feeding member 62. The winding member 61 is a rotatable member for winding the separator 7 and the electrode plate 8 to manufacture a cell. The specific structure of the winding member 61 can refer to the prior art. The material feeding member 62 is configured to convey the separator 7 and the electrode plate 8, and the specific structure may be existing structures such as a roller mechanism. In this embodiment, the material feeding member 62 is configured to convey the first separator 71, the second separator 72, the anode electrode plate 81, and the cathode electrode plate 82 to the winding member 61. The winding member 61 then jointly winds the first separator 71, the second separator 72, the anode electrode plate 81, and the cathode electrode plate 82 to manufacture the cell. When the cell has been wound to a certain extent to manufacture a semi-finished member 9, the feeding system transfers the support member 2 onto the second separator 72. Under the action of frictional force, the support member 2 is wound into the semi-finished member 9 along with the second separator 72, ultimately manufacturing the cell. Certainly, in addition to the optional embodiment shown in FIG. 2, the feeding system can also be configured to transfer the support member 2 to the first separator 71, the anode electrode plate 81, or the cathode electrode plate 82, so that the support member 2 is wound with the first separator 71, the anode electrode plate 81, or the cathode electrode plate 82. The effect achieved in this way is the same as that achieved by winding the support member 2 with the second separator 72.

The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A feeding system, comprising:
a placement apparatus provided with a supporting surface, the supporting surface being configured to hold a support member;
a material feeding apparatus configured to transport the support member onto the supporting surface; and
a transfer apparatus connected to the placement apparatus, the transfer apparatus being configured to drive the placement apparatus to move to transfer the support member onto a separator or an electrode plate wound by a winding mechanism.

2. The feeding system according to claim 1, wherein the placement apparatus comprises two limiting members, and the two limiting members are arranged oppositely and protrude from the supporting surface; a sliding groove is formed between the two limiting members to allow the support member to move on the supporting surface.

3. The feeding system according to claim 2, wherein the feeding system further comprises an adjustment mechanism, wherein the limiting members are connected to the adjustment mechanism, and the adjustment mechanism is configured to adjust a protruding height of the limiting members from the supporting surface.

4. The feeding system according to claim 3, wherein the supporting surface is provided with accommodating grooves for accommodating the limiting members.

5. The feeding system according to any one of claims 2 to 4, wherein the transfer apparatus comprises:
a pushing member connected to the placement apparatus, the pushing member being configured to push the placement apparatus; and
a rotating member connected to the placement apparatus, the rotating member being configured to drive the placement apparatus to rotate so that an extension direction of the sliding groove aligns with a winding direction of the separator or the electrode plate.

6. The feeding system according to any one of claims 1 to 5, wherein the supporting surface is provided with a first air hole; the feeding system further comprises a first negative pressure mechanism, and the first negative pressure mechanism is in communication with the first air hole.

7. The feeding system according to any one of claims 1 to 6, wherein the supporting surface is provided with a first air hole; the feeding system further comprises an air-blowing mechanism, and the air-blowing mechanism is in communication with the first air hole.

8. The feeding system according to claim 7, wherein the supporting surface comprises a first region and a second region, with the first region and the second region arranged along a movement direction of the support member on the supporting surface,
wherein the first region and the second region are both provided with the first air holes, with an air blowing pressure of the first air hole in the first region being greater than an air blowing pressure of the first air hole in the second region.

9. The feeding system according to any one of claims 1 to 8, wherein the material feeding apparatus comprises:
a pickup assembly configured to pick up the support member; and
a driving mechanism connected to the pickup assembly, the driving mechanism being configured to drive the pickup assembly to move to transport the support member picked up by the pickup assembly onto the supporting surface.

10. The feeding system according to claim 9, wherein the pickup assembly comprises an adsorption member, and the adsorption member is configured to adsorb the support member.

11. The feeding system according to claim 10, wherein the pickup assembly further comprises a second negative pressure mechanism, and the adsorption member is provided with an adsorption surface for making contact with the support member; the adsorption surface is provided with a second air hole, and the second negative pressure mechanism is in communication with the second air hole.

12. The feeding system according to claim 9, wherein the pickup assembly comprises a gripping member, and the gripping member is configured to grip the support member.

13. The feeding system according to any one of claims 1 to 12, wherein the feeding system further comprises a material preparation box, wherein the material preparation box is configured to accommodate the support member, and the material feeding apparatus is configured to transport the support member within the material preparation box onto the supporting surface.

14. The feeding system according to claim 13, wherein the material preparation box is provided with an opening; the feeding system further comprises a jacking apparatus, and the jacking apparatus is configured to jack up the support member within the material preparation box so as to move the support member in a direction close to the opening.

15. Cell winding equipment, comprising:
a winding mechanism configured to wind a separator and an electrode plate; and
the feeding system according to any one of claims 1 to 14.
